# EUROPEAN PATENT APPLICATION

(11) **EP 4 167 638 A1**
(43) Date of publication of application: **19.04.2023**
(21) Application number: 21826337.4
(22) Date of filing: 16.03.2021
(51) Int. Cl.: H04W 36/00

(54) **CELL HANDOVER METHOD AND APPARATUS, COMMUNICATION DEVICE, AND STORAGE MEDIUM**

(30) Priority: 16.06.2020 CN 202010549639
(71) Applicant: ZTE Corporation, Shenzhen, Guangdong 518057 (CN)
(72) Inventor: CHEN, Kanhao, Shenzhen, Guangdong 518057 (CN)
(74) Representative: Ricker, Mathias
(86) International application number: PCT/CN2021/081048
(87) International publication number: WO 2021/253892

(57) **Abstract**

Embodiments of the present application provide a cell handover method and apparatus, a communication device, and a storage medium. The method comprises: monitoring a spatial domain parameter of a terminal in the movement process, the spatial domain parameter being used for denoting the degree of spatial offset of the terminal relative to a current serving cell, and the degree of spatial offset of the terminal relative to a current monitoring cell; and according to the spatial domain parameter, determining that the terminal moves into a handover interval between the current serving cell and the current monitoring cell, and using the current monitoring cell as a new current serving cell of the terminal.

## Description

### TECHNICAL FIELD

The present application relates to the field of wireless communications, and to a cell handover method and apparatus, a communication device, and a storage medium.

### BACKGROUND

In a wireless communication system, in order to ensure the communication continuity of a terminal, a cell handover may occur in a moving process of the terminal. Generally, the terminal measures a received signal strength of a cell. In a case where a signal strength of a target cell is greater than a signal strength of a serving cell and a difference between the signal strength of the target cell and the signal strength of the serving cell exceeds a preset threshold, the terminal initiates a handover operation to handover from the serving cell to the target cell. However, when a moving speed of the terminal is relatively high, a handover success rate of the cell handover method in the related art is relatively low.

### SUMMARY

The following is a summary of the subject matter described in detail herein. This summary is not intended to limit the scope of protection of the claims.

The present application provides a cell handover method and apparatus, a communication device, and a storage medium.

In a first aspect, an embodiment of the present application provides a cell handover method. The cell handover method includes that: a spatial domain parameter in a moving process of a terminal is monitored, where the spatial domain parameter is configured for representing a degree of spatial offset of the terminal with respect to a current serving cell and a degree of spatial offset of the terminal with respect to a current listening cell; and in response to determining that the terminal moves within a handover region between the current serving cell and the current listening cell according to the spatial domain parameter, the current listening cell is configured as a new current serving cell of the terminal.

In a second aspect, an embodiment of the present application provides a cell handover apparatus. The cell handover apparatus is applied to the cell handover method provided in the first aspect of the embodiment of the present application, and includes a monitoring module and a handover module. The monitoring module is configured to monitor a spatial domain parameter between the terminal and a current serving cell and a spatial domain parameter between the terminal and a current listening cell in a moving process of a terminal, where the spatial domain parameter is configured for representing a degree of spatial offset of the terminal with respect to the current serving cell and a degree of spatial offset of the terminal with respect to the current listening cell. The handover module is configured to, in response to determining that the terminal moves within a handover region between the current serving cell and the current listening cell according to the spatial domain parameter between the terminal and the current serving cell and the spatial domain parameter between the terminal and the current listening cell, configure the current listening cell as a new current serving cell of the terminal.

In a third aspect, an embodiment of the present application provides a communication device. The communication device includes a memory and a processor. The memory stores a computer program. The computer program, when executed by the processor, implements the cell handover method provided in the first aspect of the embodiment of the present application.

In a fourth aspect, an embodiment of the present application provides a storage medium. The storage medium stores a computer program. The computer program, when executed by a processor, implements the cell handover method provided in the first aspect of the embodiment of the present application.

Other aspects will become apparent upon reading and understanding the accompanying drawings and the detailed description.

### BRIEF DESCRIPTION OF DRAWINGS

FIG. 1 is a structural diagram of a communication system to which a cell handover method provided in an embodiment of the present application is applied;
FIG. 2 is a flowchart of a cell handover method provided in an embodiment of the present application;
FIG. 3 is another flowchart of a cell handover method provided in an embodiment of the present application;
FIG. 4 is another flowchart of a cell handover method provided in an embodiment of the present application;
FIG. 5 is a schematic diagram of a cell layout in a high-speed railway scenario provided in an embodiment of the present application;
FIG. 6 is a structural diagram of a cell handover apparatus provided in an embodiment of the present application; and
FIG. 7 is a structural diagram of a communication device provided in an embodiment of the present application.

### DETAILED DESCRIPTION

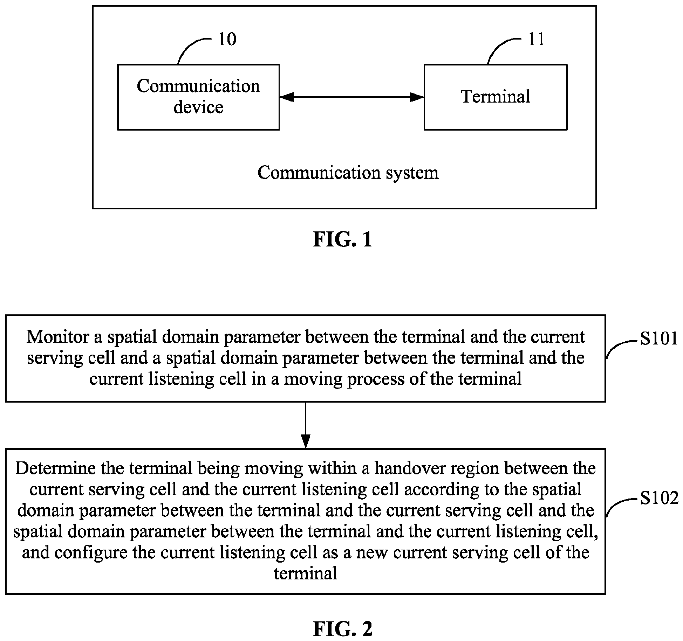

An embodiment of the present application provides a cell handover method, and the cell handover method may be applied to a communication system as shown in FIG. 1. The communication system may include a communication device 10 and a terminal 11. The communication device 10 may be any kind of network-based base station, such as a 4G base station, a 5G base station or even a future 6G base station. Of course, the communication device 10 may also be a distributed base station (including a baseband processing unit and a radio frequency processing unit, one baseband processing unit may be connected to multiple radio frequency processing units by an optical fiber), or a baseband processing unit in the distributed base station. The terminal 11 may be an electronic device such as a smartphone, a tablet, a smartwatch, a fitness tracker, and a virtual reality device, and specific forms of the communication device 10 and the terminal 11 are not limited in the embodiment of the present application.

Hereinafter, embodiments of the present application will be described in detail in conjunction with the accompanying drawings. It should be noted that the embodiments and features of the embodiments of the present application may be combined in any combination with each other without conflict.

It should be noted that an execution subject of method embodiments described below may be a cell handover apparatus, this apparatus may be implemented as part or all of the above-described communication device by software, hardware, or a combination of software and hardware. The method embodiments described below are described by way of an example that the execution subject is the communication device.

FIG. 2 is a flowchart of a cell handover method provided in an embodiment of the present application. This embodiment relates to a scenario where a current serving cell and a current listening cell of a terminal are non-co-located cells, as shown in FIG. 2, the method may include described below.

In S101, a spatial domain parameter between the terminal and the current serving cell and a spatial domain parameter between the terminal and the current listening cell in a moving process of the terminal are monitored.

The spatial domain parameter is configured for representing a degree of spatial offset of the terminal with respect to the current serving cell and a degree of spatial offset of the terminal with respect to the current listening cell. In an embodiment, the spatial domain parameter may be a frequency offset, a signal-to-noise ratio, a time offset, etc. between the terminal and the current serving cell, and a frequency offset, a signal-to-noise ratio, a time offset, etc. between the terminal and the current listening cell. Alternatively, the spatial domain parameter may be other parameters for representing a degree of spatial frequency offset of the terminal with respect to the current serving cell and a degree of spatial frequency offset of the terminal with respect to the current listening cell. The current serving cell refers to a cell in which a service is provided to the terminal at a current moment, that is, a cell in a communication connection with the terminal. The current listening cell refers to a cell in which no service is provided to the terminal at a current moment, but a data monitoring is performed for the terminal, and the current listening cell is not in communication connection with the terminal. The terminal communicates with the cell in a moving process of the terminal, and due to the presence of the Doppler effect, a certain frequency offset in signals received by the cell may exist. Meanwhile, since there is a certain distance between the terminal and the cell, a certain time offset for the signals received by the cell exists. During communication of the terminal with the current serving cell, the terminal sends a signal to the current serving cell, the current serving cell receives the signal sent by the terminal. In order to ensure synchronization of the current serving cell with the signal sent by the terminal, the current serving cell corrects the time offset and the frequency offset of the received signal.

In an embodiment, the terminal may periodically send an uplink sounding reference signal (SRS), at this time, the communication device may periodically receive the SRS sent by the terminal and demodulate the SRS to obtain the spatial domain parameter between the terminal and the current serving cell and the spatial domain parameter between the terminal and the current listening cell in the moving process of the terminal. In an embodiment, if the terminal sends a physical uplink shared channel (PUSCH), at this time, the communication device may also demodulate the PUSCH to obtain the spatial domain parameter between the terminal and the current serving cell and the spatial domain parameter between the terminal and the current listening cell in the moving process of the terminal.

Exemplarily, the terminal may periodically send the SRS, at this time, the communication device may periodically receive the SRS sent by the terminal and demodulate the SRS to obtain the time offset and the frequency offset between the terminal and the current serving cell and the time offset and the frequency offset between the terminal and the current listening cell in the moving process of the terminal. In addition, the communication device may also obtain the signal-to-noise ratio of the terminal to the current serving cell and the signal-to-noise ratio of the terminal to the current listening cell by demodulating the SRS sent by the terminal. If the obtained signal-to-noise ratio is less than a preset threshold value, then it may be considered that the monitored time offset and the monitored frequency offset between the terminal and the current serving cell and the monitored time offset and the monitored frequency offset between the terminal and the current listening cell are not credible, a subsequent cell handover is not performed based on the monitored time offset and the monitored frequency offset, and a monitoring is continued to be performed. In S102, the terminal being moving within a handover region between the current serving cell and the current listening cell is determined according to the spatial domain parameter between the terminal and the current serving cell and the spatial domain parameter between the terminal and the current listening cell, then the current listening cell is configured as a new current serving cell of the terminal.

The above-described handover region refers to a coverage overlapping region of the current serving cell and the current listening cell, and the above-described handover region is an optimal handover band for the terminal to perform the cell handover. In practical applications, in order to ensure the normal communication of the terminal, different coverage scenarios will have corresponding requirements for handover regions between cells, and a cell planning under the coverage scenario needs to be performed according to a field geographic environment. For example, when the coverage scenario is a high-speed railway scenario, the cell planning may be performed according to the line of the high-speed railway and the geographical environment along the line. Meanwhile, in order to ensure that the terminal may complete the handover in the handover region between the cells, and a length of the handover region needs to be correspondingly set, and meanwhile, a position of the handover region may be planned in such a way that a center position point of the handover region between two cells is at a consistent distance to the two cells, respectively.

It is considered that a signal strength between the terminal and the current serving cell within the handover region is approximately equal to a signal strength between the terminal and the current listening cell within the handover region, it is difficult to complete the handover within the handover region solely depending on the signal strength between the terminal and the current serving cell and the signal strength between the terminal and the current listening cell. To this end, since the spatial domain parameter may represent the degree of spatial offset of the terminal with respect to the current serving cell and the degree of spatial offset of the terminal with respect to the current listening cell, therefore, it is possible to determine whether the terminal moves into the handover region based on the spatial domain parameter between the terminal and the current serving cell and the spatial domain parameter between the terminal and the current listening cell, and upon determining that the terminal moves into the handover region, the current listening cell is configured as the new current serving cell of the terminal, i.e., the service of the current serving cell to the terminal is turned off, the service is provided to the terminal by the current listening cell, whereby the cell handover is completed.

According to the cell handover method and apparatus, the communication device, and the storage medium provided in the embodiments of the present application, where the communication device monitors the spatial domain parameter between the terminal and the current serving cell and the spatial domain parameter between the terminal and the current listening cell in the moving process of the terminal, where the spatial domain parameter is configured for representing the degree of spatial offset of the terminal with respect to the current serving cell and the degree of spatial offset of the terminal with respect to the current listening cell; the terminal being moving within the handover region between the current serving cell and the current listening cell is determined according to the spatial domain parameter between the terminal and the current serving cell and the spatial domain parameter between the terminal and the current listening cell, then the current listening cell is configured as the new current serving cell of the terminal. Since in a process of the cell handover, when the communication device determines the terminal being moving within the handover region of the current serving cell and the current listening cell based on the monitored degree of spatial offset of the terminal with respect to the current serving cell and the monitored degree of spatial offset of the terminal with respect to the current listening cell, the cell handover is performed. In contrast to the related art, in the technical scheme provided in the embodiments of the present application, the terminal is enabled to handover from the current serving cell to the current listening cell within the handover region of the current serving cell and the current listening cell, whereby the handover success rate of the cell is improved.

In practical applications, the current serving cell and the current listening cell may be co-located or non-co-located cells. In an embodiment, the spatial domain parameter includes a time offset and a frequency offset, in a case where the current serving cell and the current listening cell may be the non-co-located cells, the S 102 described above may include that: the terminal being located in an overlapping region of the current serving cell and the current listening cell is determined according to a time offset between the terminal and the current listening cell, the terminal being moving away from the current serving cell and being approaching the current listening cell is determined according to a frequency offset between the terminal and the current serving cell and a frequency offset between the terminal and the current listening cell, and the current listening cell is configured as the new current serving cell of the terminal.

In an embodiment, the spatial domain parameter includes a signal-to-noise ratio and a frequency offset, in a case where the current serving cell and the current listening cell may be the co-located cells, the S102 described above may include that: the terminal being entering a primary coverage of the current listening cell is determined according to a signal-to-noise ratio of the terminal to the current serving cell and a signal-to-noise ratio of the terminal to the current listening cell, and the terminal is moving away from the current serving cell and the current listening cell is determined according to a frequency offset between the terminal and the current serving cell and a frequency offset between the terminal and the current listening cell, and the current listening cell is configured as the new current serving cell of the terminal.

The cell handover method according to the embodiments of the present application is described below for different scenarios.

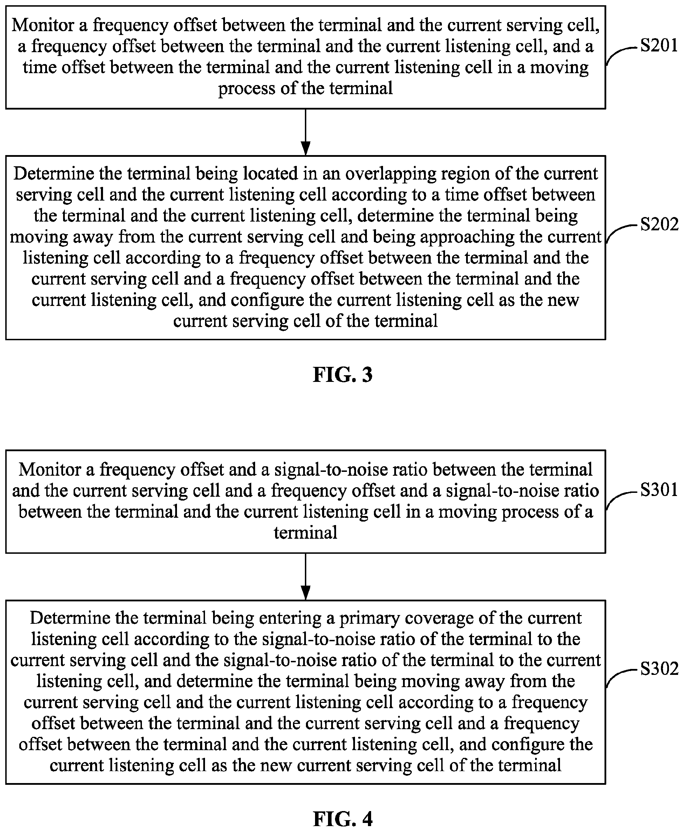

FIG. 3 is another flowchart of a cell handover method provided in an embodiment of the present application. This embodiment relates to a scenario where the current serving cell of the terminal and the current listening cell of the terminal are the non-co-located cells, as shown in FIG. 3, the method may include described below.

In S201, a frequency offset between the terminal and the current serving cell, a frequency offset between the terminal and the current listening cell, and a time offset between the terminal and the current listening cell in a moving process of the terminal are monitored.

In S202, the terminal being located in an overlapping region of the current serving cell and the current listening cell is determined according to a time offset between the terminal and the current listening cell, the terminal being moving away from the current serving cell and being approaching the current listening cell is determined according to a frequency offset between the terminal and the current serving cell and a frequency offset between the terminal and the current listening cell, and the current listening cell is configured as the new current serving cell of the terminal.

The above-described overlapping region refers to the coverage overlapping region of the current serving cell and the current listening cell, and the above-described overlapping region is the optimal handover band for the terminal to perform the cell handover. The communication device may monitor the frequency offset between the terminal and the current serving cell, the frequency offset between the terminal and the current listening cell, and the time offset between the terminal and the current listening cell. After the frequency offset between the terminal and the current serving cell, the frequency offset between the terminal and the current listening cell, and the time offset between the terminal and the current listening cell are obtained, the communication device may determine whether the terminal is located in the overlapping region of the current serving cell and the current listening cell based on a magnitude of the time offset between the terminal and the current listening cell, and determine whether the terminal is moving away from the current serving cell and is approaching the current listening cell based on positive and negative cases of frequency offset between the terminal and the current serving cell and between the terminal and the current listening cell. Upon determining that the terminal is located in the overlapping region of the current serving cell and the current listening cell, and upon determining that the terminal is moving away from the current serving cell and is approaching the current listening cell, the current listening cell is configured as the new current serving cell of the terminal, i.e., the service of the current serving cell to the terminal is turned off, the service is provided to the terminal by the current listening cell, whereby the cell handover is completed.

In an embodiment, the process of determining that the terminal is located in the overlapping region of the current serving cell and the current listening cell according to the time offset between the terminal and the current listening cell in the S202 described above may be: if the time offset between the terminal and the current listening cell is less than a preset time offset threshold, then the terminal is determined to be located in the overlapping region of the current serving cell and the current listening cell.

In an embodiment, the process of determining that the terminal being moving away from the current serving cell and being approaching the current listening cell according to the frequency offset between the terminal and the current serving cell and the frequency offset between the terminal and the current listening cell in the S202 described above may be: if the frequency offset between the terminal and the current serving cell is a negative value and the frequency offset between the terminal and the current listening cell is a positive value, then it is determined that the terminal is moving away from the current serving cell and is approaching the current listening cell.

In this embodiment, in a case where the current serving cell and the current listening cell of the terminal are the non-co-located cells, the communication device monitors the frequency offset between the terminal and the current serving cell, the frequency offset between the terminal and the current listening cell, and the time offset between the terminal and the current listening cell in the moving process of the terminal; and the terminal being located in the overlapping region of the current serving cell and the current listening cell is determined according to the time offset between the terminal and the current listening cell, the terminal being moving away from the current serving cell and being approaching the current listening cell is determined according to the frequency offset between the terminal and the current serving cell and the frequency offset between the terminal and the current listening cell, and the current listening cell is configured as the new current serving cell of the terminal. Since in a cell handover process, the communication device determines the terminal being located in the overlapping region of the current serving cell and the current listening cell based on the monitored time offset between the terminal and the current listening cell, and meanwhile, the communication device may, based on the monitored frequency offset between the terminal and the current serving cell and the monitored frequency offset between the terminal and the current listening cell, perform the cell handover when it is determined that the terminal is moving away from the current serving cell and is approaching the current listening cell. That is, in the technical schemes provided in the embodiments of the present application, in the moving process of the terminal, the stable and reliable handover of the terminal from the current serving cell to the current listening cell may be achieved in the overlapping region of the current serving cell and the current listening cell through the time offset and the frequency offset between the terminal and the current serving cell and the time offset and the frequency offset between the terminal and the current listening cell, thereby the handover success rate of the cell is improved.

In practical applications, a distributed base station may be employed for coverage of various types of application scenarios. The distributed base station includes a baseband processing unit and a radio frequency processing unit, one baseband processing unit may be connected to multiple radio frequency processing units by an optical fiber, one baseband processing unit and one radio frequency processing unit form one cell. The above-described current serving cell and the above-described current listening cell may or may not share the baseband processing unit.

In an embodiment, if the current serving cell and the current listening cell share the baseband processing unit, then the current listening cell is a cell in which a frequency offset from the terminal to a cell among adjacent cells of the current serving cell is a positive value.

In an embodiment, for a case that the current serving cell and the current listening cell share the baseband processing unit, after the terminal has accessed the current serving cell, the communication device (which may be the baseband processing unit of the current serving cell at this time) may configure, as the current listening cell of the terminal, the cell in which the frequency offset from the terminal to the cell among the adjacent cells of the current serving cell is the positive value. At this time, the communication device constantly monitors the time offset and the frequency offset between the terminal and the current serving cell and the time offset and the frequency offset between the terminal and the current listening cell, as the terminal moves, the terminal being moving to the overlapping region of the current serving cell and the current listening cell is determined based on the time offset between the terminal and the current listening cell, and the terminal being moving away from the current serving cell and being approaching the current listening cell is determined based on the frequency offset between the terminal and the current serving cell and the frequency offset between the terminal and the current listening cell, the communication device configures the current listening cell as the new current serving cell of the terminal, i.e., the service is provided to the terminal by the current listening cell. Meanwhile, in order to ensure the communication quality of the terminal in a subsequent moving process, the communication device configures, as the new listening cell of the terminal, a cell in which a frequency offset from the terminal to a cell among adjacent cells of the current listening cell is a positive value, and continues to perform the processes of S201-S202 described above.

In an embodiment, if the current serving cell and the current listening cell do not share a baseband processing unit, then the current listening cell is a cell in which a time offset from the terminal to a cell is minimum and a frequency offset from the terminal to the cell is a positive value in a cell of a next baseband processing unit of the baseband processing unit of the current serving cell.

In an embodiment, for a case that the current serving cell and the current listening cell do not share the baseband processing unit, i.e., a case of a cell handover of the terminal across the baseband processing unit, when the current serving cell is a last cell in a baseband processing unit where the current serving cell is located, the communication device may send a notification message to the terminal so as to instruct the terminal to start a synchronization signal scan to further search for a new cell. After the new cell is searched, the terminal sends a physical random access channel (PRACH) when a latency from the new cell to the terminal is less than a preset threshold. Since different baseband processing units are configured with different logical root sequences, and at this time, all cells of the baseband processing unit (i.e., a next baseband processing unit described above) of the new cell will then resolve the PRACH, whereby time offsets and frequency offsets of the respective cells between the terminal and the next baseband processing unit are obtained. The communication device may configure, as the current listening cell of the terminal, a cell in which a time offset between the terminal and the cell among the cells of the next baseband processing unit is minimum and a frequency offset between the terminal and the cell among the cells of the next baseband processing unit is a positive value.

As such, the communication device constantly monitors the time offset and the frequency offset between the terminal and the current serving cell and the time offset and the frequency offset between the terminal and the current listening cell, as the terminal moves, the terminal being moving to the overlapping region of the current serving cell and the current listening cell is determined based on the time offset between the terminal and the current listening cell, and the terminal being moving away from the current serving cell and being approaching the current listening cell is determined based on the frequency offset between the terminal and the current serving cell and the frequency offset between the terminal and the current listening cell, the communication device configures the current listening cell as the new current serving cell of the terminal, i.e. the service is provided to the terminal by the current listening cell. Meanwhile, in order to ensure the communication quality of the terminal in the subsequent moving process, the communication device configures, as the new listening cell of the terminal, the cell in which the frequency offset from the terminal to the cell among the adjacent cells of the current listening cell is the positive value, and continues to perform the processes of S201-S202 described above.

In this embodiment, the current listening cell of the terminal may be determined based on whether the current serving cell and the current listening cell share the baseband processing unit, the purpose of performing the cell handover when the terminal is located in the overlapping region of the current serving cell and the current listening cell is achieved based on the time offset and the frequency offset between the terminal and the current serving cell and the time offset and the frequency offset between the terminal and the current listening cell, whereby not only a cell handover under a same baseband processing unit is achieved, but also a cell handover across the baseband processing unit is achieved.

FIG. 4 is another flowchart of a cell handover method provided in an embodiment of the present application. This embodiment relates to a scenario that the current serving cell and the current listening cell of the terminal are co-located cells, as shown in FIG. 4, the method may include described below.

In S301, a frequency offset and a signal-to-noise ratio between the terminal and the current serving cell and a frequency offset and a signal-to-noise ratio between the terminal and the current listening cell in a moving process of a terminal are monitored.

The current serving cell refers to a cell in which a service is provided to the terminal at a current moment, that is, a cell in a communication connection with the terminal. The current listening cell refers to a cell in which no service is provided to the terminal at a current moment, but a data monitoring is performed for the terminal, and the current listening cell is not in communication connection with the terminal. In the moving process of the terminal, there may be a certain frequency offset between the terminal and the cell due to the presence of the Doppler effect.

In an embodiment, the terminal may periodically send the SRS, at this time, the communication device may periodically receive the SRS sent by the terminal and demodulate the SRS so as to obtain the frequency offset and the signal-to-noise ratio between the terminal and the current serving cell and the frequency offset and the signal-to-noise ratio between the terminal and the current listening cell in the moving process of the terminal. If the obtained signal-to-noise ratio is less than a preset threshold value, then it may be considered that the monitored frequency offset between the terminal and the current serving cell and the monitored frequency offset between the terminal and the current listening cell are not credible, a subsequent cell handover is not performed based on the monitored frequency offset and the monitored signal-to-noise ratio, and a monitoring is continued to be performed. In an embodiment, the communication device may also obtain the time offset between the terminal and the current serving cell and the time offset between the terminal and the current listening cell by demodulating the SRS sent by the terminal. In an embodiment, if the terminal sends the PUSCH, the communication device may also demodulate the PUSCH at this time to obtain the frequency offset and the signal-to-noise ratio between the terminal and the current serving cell and the frequency offset and the signal-to-noise ratio between the terminal and the current listening cell in the moving process of the terminal. In S302, the terminal being entering a primary coverage of the current listening cell is determined according to the signal-to-noise ratio of the terminal to the current serving cell and the signal-to-noise ratio of the terminal to the current listening cell, and the terminal being moving away from the current serving cell and the current listening cell is determined according to a frequency offset between the terminal and the current serving cell and a frequency offset between the terminal and the current listening cell, and the current listening cell is configured as the new current serving cell of the terminal.

When the current serving cell and the current listening cell are the co-located cells, typically, an antenna radiation direction of the current serving cell is opposite from an antenna radiation direction of the current listening cell, and thus the frequency offset between the terminal and the current serving cell monitored by the communication device is substantially the same as the frequency offset between the terminal and the current listening cell monitored by the communication device. However, as the terminal moves, the signal-to-noise ratio of the terminal to the current listening cell may be increasingly larger and the signal-to-noise ratio of the terminal to the current listening cell may be increasingly smaller. Based on this, the communication device determines whether the terminal is moving away from the current serving cell and the current listening cell based on positive and negative cases of the frequency offsets between the terminal and the current serving cell and between the terminal and the current listening cell, and determines whether the terminal is entering the primary coverage of the current listening cell based on a comparison result of the signal-to-noise ratio of the terminal to the current serving cell and the signal-to-noise ratio of the terminal to the current serving cell the current listening cell. When it is determined that the terminal is entering the primary coverage of the current listening cell and is moving away from the current serving cell and the current listening cell, the current listening cell is configured as the new current serving cell of the terminal, i.e., the service of the current service cell for the terminal is turned off, and the current listening cell provides the service for the terminal, whereby the cell handover of the co-located cells is completed.

In an embodiment, if the frequency offset between the terminal and the current serving cell and the frequency offset between the terminal and the current listening cell are both negative values, then it is determined that the terminal is moving away from the current serving cell and the current listening cell. If the signal-to-noise ratio of the terminal to the current listening cell is greater than the signal-to-noise ratio of the terminal to the current serving cell, then it is determined that the terminal enters the primary coverage of the current listening cell. That is, the communication device configures the current listening cell as the new current serving cell of the terminal when it is monitored that the frequency offset between the terminal and the current serving cell and the frequency offset between the terminal and the current listening cell are both negative values and the signal-to-noise ratio of the terminal to the current listening cell is greater than the signal-to-noise ratio of the terminal to the current serving cell.

In an embodiment, the current serving cell and the current listening cell share the baseband processing unit, the current listening cell is a cell in which a frequency offset from the terminal to a cell among adjacent cells of the current serving cell is a positive value.

In an embodiment, for a case that the current serving cell and the current listening cell share the baseband processing unit and the current serving cell and the current listening cell are co-located, after the terminal has accessed the current serving cell, the communication device (which may be the baseband processing unit of the current serving cell at this time) may configure, as the current listening cell of the terminal, the cell in which the frequency offset from the terminal to the cell among the adjacent cells of the current serving cell is the positive value. At this time, the communication device constantly monitors the frequency offset and the signal-to-noise ratio between the terminal and the current serving cell and the frequency offset and the signal-to-noise ratio between the terminal and the current listening cell, as the terminal moves, the terminal being moving away from the current serving cell and the current listening cell is determined based on the frequency offset between the terminal and the current serving cell and the frequency offset between the terminal and the current listening cell, i.e., at this time, the terminal is located in a coverage border region of the current serving cell and the current listening cell; meanwhile, the communication device monitors that the signal-to-noise ratio of the terminal to the current serving cell is less than the signal-to-noise ratio of the terminal to the current listening cell, it may determine that the terminal is entering the primary coverage of the current listening cell, at this time, the communication device may configure the current listening cell as the new current serving cell of the terminal, i.e., the service is provided to the terminal by the current listening cell. Meanwhile, in order to ensure the communication quality of the terminal in a subsequent moving process, the communication device may configure, as the new listening cell of the terminal, a cell in which a frequency offset from the terminal to a cell among adjacent cells of the current listening cell is a positive value.

In this embodiment, in a case where the current serving cell and the current listening cell of the terminal are the co-located cells, the communication device monitors the frequency offset and the signal-to-noise ratio between the terminal and the current serving cell and the frequency offset and the signal-to-noise ratio between the terminal and the current listening cell in the moving process of the terminal; and the terminal being entering the primary coverage of the current listening cell is determined according to the signal-to-noise ratio of the terminal to the current serving cell and the signal-to-noise ratio of the terminal to the current listening cell, and the terminal being moving away from the current serving cell and the current listening cell is determined according to the frequency offset between the terminal and the current serving cell and the frequency offset between the terminal and the current listening cell, and the current listening cell is configured as the new current serving cell of the terminal. When the current serving cell and the current listening cell of the terminal are the co-located cells, the communication device may, based on the frequency offset and the signal-to-noise ratio between the terminal and the current serving cell and the frequency offset and the signal-to-noise ratio between the terminal and the current listening cell, determine that the terminal performs the cell handover upon entering the primary coverage of the current listening cell from the current serving cell, that is, the terminal is enabled to handover from the current serving cell to the current listening cell stably and reliably within a coverage border region of the current serving cell and the current listening cell, whereby the handover success rate of the cell is improved.

In order to facilitate the understanding of those skilled in the art, the cell handover method provided in the embodiments of the present application is described below by using an example of an application scenario being a high-speed railway scenario. Of course, the cell handover method provided in the embodiments of the present application is also applicable to a highway scenario.

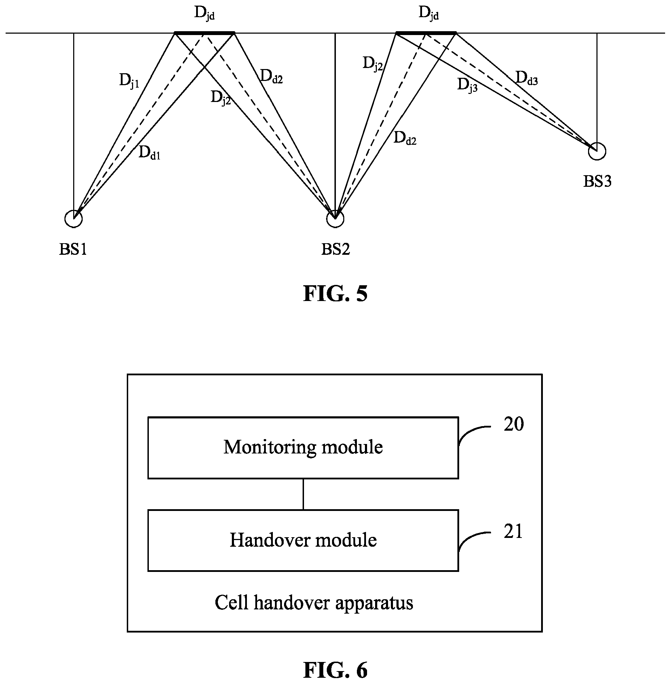

For example, in order to improve the cell handover success rate in the high-speed railway scenario, high-speed railway sites need to be planned based on the geographical environment along the high-speed railway line, the planned distribution of sites may be seen in FIG. 5. In a planning process of the sites, following principles need to be followed:
a. A length of the overlapping region between cells should satisfy *D_{jd}* > *v* ∗ *Tₛᵣₛ*, where *D_{jd}* is the length of the overlapping region, *Tₛᵣₛ* is a sending period of the SRS, and v is a speed of a train (i.e., a moving speed of the terminal). In a case of *Tₛᵣₛ* = 1s, *v*=*360km*/*h, D_{jd}* > 100m is satisfied.
b. Distances of two end points of the overlapping region from two adjacent cells should satisfy |*D*_{*j*1} - *D*_{*j*2}|< *c* ∗ *T_{cp},* |*D*_{*d*1} - *D*_{*d*2}| < *c* ∗ *T_{cp},* where *D*_{*j*1} is a distance of a first end point of two end points in an overlapping region of a cell 1 and a cell 2 from the cell 1, *D*_{*j*2} is a distance of the first end point of the two end points of the overlapping region from the cell 2, *D*_{*d*1} is a distance of a second end point of the two end points in the overlapping region of the cell 1 and the cell 2 from the cell 1, *D*_{*d*2} is a distance of a second end point of the two end points of the overlapping region from the cell 2, *T_{cp}* is a cyclic prefix (CP) length, and *c* is a speed of light. For a new air interface with a subcarrier spacing of 30KHZ, *c* ∗ *T_{cp}* is about 700m. In addition, the above BS1 is the cell 1, the BS2 is the cell 2, and the BS3 is the cell 3, |*D*_{*j*2} - *D*_{*j*3}|< *c* ∗ *T_{cp}* and |*D*_{*d*2} - *D*_{*d*3}|< *c* ∗ *T_{cp}* is also required. *D*_{*j*3} is a distance of a first end point of two end points in an overlapping region of a cell 2 and a cell 3 from the cell 3, and *D*_{*d*3} is a distance of a second end point of the two end points in the overlapping region of the cell 2 and the cell 3 from the cell 3.
c. A position of the overlapping region may be determined such that distances of a center position point of the overlapping region from two adjacent cells coincide.

Meanwhile, the planned cells may be numbered in a corresponding order. For example, in a case where the cells share the baseband processing unit, individual cells may be numbered in the order of 1, 2, 3,..., and when a change occurs in the baseband processing unit, individual cells of a new baseband processing unit are re-numbered in the order of 1, 2, 3,.... Of course, the number of cells of different baseband processing units would carry an identifier of the associated baseband processing unit.

Next, a sending period *Tₛᵣₛ* of the terminal being sending the SRS and a time-frequency resource corresponding to the SRS need to be configured. For example, the communication device schedules the accessed terminal to send a 2-symbol SRS by using the *Tₛᵣₛ* as a period. For high density users on the train (for example, each compartment is 25 meters long and is full of about 80 persons), *Tₛᵣₛ* may be considered to be set to 1s. Meanwhile, the comb type frequency division may be set to 4 combs to ensure that the time-frequency resource may support at least 400 users/sec.

Firstly, an example in which the current serving cell N_{1,1} and the current listening cell N_{1,2} share the baseband processing unit 1 will be described below.

For a case that the current serving cell and the current listening cell are the non-co-located cells, when the terminal initially accesses a cell of the baseband processing unit, the communication device may parse time offsets and frequency offsets of respective cells of the baseband processing unit through the PRACH sent by the terminal, a cell having a minimum time offset and a positive frequency offset is configured as the current serving cell of the terminal, and a cell in which a frequency offset from the terminal to a cell among adjacent cells of the current serving cell is a positive value is configured as the current listening cell. As such, the communication device may monitor the time offset, the frequency offset and the signal-to-noise ratio between the terminal and the current serving cell and the time offset, the frequency offset and the signal-to-noise ratio between the terminal and the current listening cell by demodulating the SRS sent by the terminal. When the signal-to-noise ratio is less than a preset threshold value, then it may be considered that the monitored time offset and the monitored frequency offset between the terminal and the current serving cell and the monitored time offset and the monitored frequency offset between the terminal and the current listening cell are not credible, a subsequent cell handover is not performed based on the monitored time offset and the monitored frequency offset, and a monitoring is continued to be performed.

As the terminal constantly moves, the terminal gets closer and closer to the N_{1,2}, and the time offset between the terminal and the N_{1,2} gets smaller and smaller. When it is monitored that the time offset between the terminal and the N_{1,2} is less than a preset time offset threshold, then it may be determined that the terminal is located in the overlapping region of the N_{1,1} and the N_{1,2}. Since the position of the overlapping region is set at the middle of two cells when a coverage site of the high-speed railway is planned, as the terminal moves, the frequency offset between the terminal and the N_{1,1} becomes a negative value and the frequency offset between the terminal and the N_{1,2} becomes a positive value, at this time, an optimal handover point occurs, the current listening cell N_{1,2} may be configured as the new current serving cell of the terminal. Meanwhile, a cell in which a frequency offset among adjacent cells of the current listening cell N_{1,2} is a positive value is configured as the current listening cell of the terminal (i.e., the N_{1,3} is configured as the new current listening cell of the terminal). When the N_{1,2} provides a service to the terminal, the N_{1,2} adjusts the time offset of the terminal in real time to make it approach to zero, and meanwhile, the N_{1,2} is configured as a starting point for the adaptive modulation and coding adjustment of the terminal according to the signal-to-noise ratio from the terminal to the N_{1,2}.

If the N_{1,2} and the N_{1,3} are the co-located cells, then the time offset and the frequency offset between the terminal and the N_{1,2} monitored by the communication device is always similar to the time offset and the frequency offset between the terminal and the N_{1,3} monitored by the communication device. At this time, if the communication device monitors that the frequency offsets between the terminal and the N_{1,2} and the frequency offsets between the terminal and the N_{1,3} are each less than 0, it is determined that the terminal is located in a coverage border region of the N_{1,2} and the N_{1,3}, and as the terminal constantly moves, if the communication device monitors that the signal-to-noise ratio of the terminal to the N_{1,3} is greater than the signal-to-noise ratio of the terminal to the N_{1,2}, at this time, the optimal handover point occurs, the communication device may configure the N_{1,3} as the new current serving cell of the terminal. Meanwhile, a cell in which a frequency offset among adjacent cells of the N_{1,3} is a positive value is configured as the current listening cell of the terminal (i.e., the N_{1,4} is configured as the new current listening cell of the terminal).

Next, an example in which the current serving cell and the current listening cell do not share the baseband processing unit, i.e., a baseband processing unit of the current serving cell is a baseband processing unit 1, and a baseband processing unit of the current listening cell is a baseband processing unit 2 will be described.

Firstly, it is introduced how to select the current listening cell: assuming that the current serving cell N_{1,10} is a last cell of the baseband processing unit, after the N_{1,10} provides a service to the terminal, the N_{1,10} sends a notification message to the terminal so as to instruct the terminal to start a SSB scan to further search for a new cell. The terminal firstly culls a cell in which the signal-to-noise ratio is lower than the preset threshold and secondly culls a cell in which the frequency offset is the negative value among the searched new cells, monitors the time offset of a cell in which the signal-to-noise ratio is the greatest among remaining cells, and parses a master information block (MIB) and a system information block (SIB) of this cell. After the time offset between the cell and the terminal is less than the preset threshold, it is stated that the terminal has entered a coverage of a new cell (the new cell and the N_{1,10} do not share the baseband processing unit). At this time, the terminal may send the PRACH and start the access procedure.

At this time, all cells of the baseband processing unit of the new cell (i.e., the next baseband processing unit described above) detect the PRACH sent by the terminal at any time. Upon detection of the PRACH, only a PRACH with a signal strength greater than a detection threshold is further resolved, so as to obtain time offsets and frequency offsets of multiple cells from the terminal to the next baseband processing unit. The communication device may configure, as the current listening cell N_{2,1} of the terminal, a cell in which a time offset between the terminal and the cell among the cells of the next baseband processing unit is minimum and a frequency offset between the terminal and the cell among the cells of the next baseband processing unit is a positive value.

Next, after the current listening cell N_{2,1} of the terminal is selected, the communication device constantly monitors the time offset and the frequency offset between the terminal and the current serving cell N_{1,10} and the time offset and the frequency offset between the terminal and the current listening cell N_{2,1}, as the terminal moves, the terminal being moving to an overlapping region of the N_{1,10} and the N_{2,1} is determined based on the time offset between the terminal and the N_{2,1}, and the terminal being moving away from the current serving cell and approaching the current listening cell is determined based on the frequency offset between the terminal and the N_{1,10} and the frequency offset between the terminal and the N_{2,1}, the communication device configures the N_{2,1} as the new current serving cell of the terminal, i.e., the N_{2,1} provides a service to the terminal, whereby the cell handover across the baseband processing unit is achieved. Meanwhile, in order to ensure the communication quality of the terminal in the subsequent moving process, the communication device configures a cell in which a frequency offset from the terminal to a cell among adjacent cells of the N_{2,1} is a positive value as the new listening cell of the terminal, and continues to perform the cell handover within a same baseband processing unit.

FIG. 6 is a structural diagram of a cell handover apparatus provided in an embodiment of the present application. The apparatus is applied to the cell handover method in any one of the embodiments described above. As shown in FIG. 6, the apparatus may include a monitoring module 20 and a handover module 21.

In an embodiment, the monitoring module 20 is configured to monitor a spatial domain parameter between the terminal and a current serving cell and a spatial domain parameter between the terminal and a current listening cell in a moving process of a terminal, where the spatial domain parameter is configured for representing a degree of spatial offset of the terminal with respect to the current serving cell and a degree of spatial offset of the terminal with respect to the current listening cell. The handover module 21 is configured to, in response to determining that the terminal moves within a handover region between the current serving cell and the current listening cell according to the spatial domain parameter between the terminal and the current serving cell and the spatial domain parameter between the terminal and the current listening cell, configure the current listening cell as a new current serving cell of the terminal.

According to the cell handover apparatus provided in the embodiments of the present application, the communication device is configured to: monitor the spatial domain parameter between the terminal and the current serving cell and the spatial domain parameter between the terminal and the current listening cell in the moving process of the terminal, where the spatial domain parameter is configured for representing the degree of spatial offset of the terminal with respect to the current serving cell and the degree of spatial offset of the terminal with respect to the current listening cell; and in response to determining that the terminal moves within the handover region between the current serving cell and the current listening cell according to the spatial domain parameter between the terminal and the current serving cell and the spatial domain parameter between the terminal and the current listening cell, the current listening cell is configured as the new current serving cell of the terminal. Since in a cell handover process, the communication device is configured to perform a cell handover when it is determined that the terminal moves within the handover region between the current serving cell and the current listening cell based on the monitored degree of spatial offset of the terminal with respect to the current serving cell and the monitored degree of spatial offset of the terminal with respect to a current listening cell. In contrast to the related art, in the technical schemes provided in embodiments of the present application, the terminal is enabled to handover from the current serving cell to the current listening cell within the handover region between the current serving cell and the current listening cell, so that the handover success rate of the cell is improved.

On the basis of the above-described embodiments, the spatial domain parameter includes a time offset and a frequency offset, and the above-described handover module 21 is configured to: in a case where the current serving cell and the current listening cell are non-co-located cells, determine that the terminal is located in an overlapping region of the current serving cell and the current listening cell according to a time offset between the terminal and the current listening cell, determine that the terminal is moving away from the current serving cell and is approaching the current listening cell according to a frequency offset between the terminal and the current serving cell and a frequency offset between the terminal and the current listening cell, and configure the current listening cell as the new current serving cell of the terminal.

On the basis of the above-described embodiments, the spatial domain parameter includes a signal-to-noise ratio and a frequency offset, and the above-described handover module 21 is configured to: in a case where the current serving cell and the current listening cell are co-located cells, determine that the terminal enters a primary coverage of the current listening cell according to a signal-to-noise ratio of the terminal to the current serving cell and a signal-to-noise ratio of the terminal to the current listening cell, and determine that the terminal is moving away from the current serving cell and the current listening cell according to a frequency offset between the terminal and the current serving cell and a frequency offset between the terminal and the current listening cell, and configure the current listening cell as the new current serving cell of the terminal

In an embodiment, if the current serving cell and the current listening cell share a baseband processing unit, then the current listening cell is a cell in which a frequency offset from the terminal to a cell among adjacent cells of the current serving cell is a positive value.

In an embodiment, if the current serving cell and the current listening cell do not share a baseband processing unit, then the current listening cell is a cell in which a time offset from the terminal to a cell is minimum and a frequency offset from the terminal to the cell is a positive value in a cell of a next baseband processing unit of the baseband processing unit of the current serving cell. On the basis of the above-described embodiments, the handover module 21 includes a first determination unit.

In an embodiment, the first determination unit is configured to: in a case where the time offset between the terminal and the current listening cell is less than a preset time offset threshold, determine that the terminal is located in the overlapping region of the current serving cell and the current listening cell.

On the basis of the above-described embodiments, the handover module 21 includes a second determination unit.

In an embodiment, the second determination unit is configured to: in a case where the frequency offset between the terminal and the current serving cell is a negative value and the frequency offset between the terminal and the current listening cell is a positive value, determine that the terminal is moving away from the current serving cell and is approaching the current listening cell.

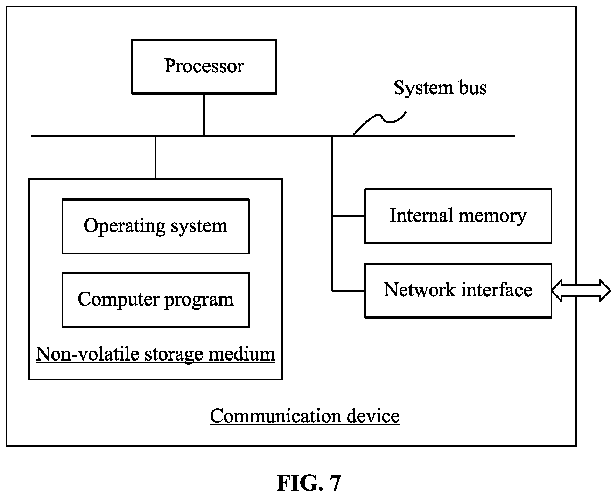

In an embodiment, a communication device is provided. An internal structure diagram of the communication device may be as shown in FIG. 7. The communication device includes a processor, a memory, a network interface, and an antenna (not shown in FIG. 7) connected by a system bus. The processor of the communication device is configured to provide computing and control capabilities. The memory of the communication device includes a non-volatile storage medium and an internal memory. The non-volatile storage medium stores an operating system and a computer program. The internal memory provides an environment for operation of the operating system and the computer program in the non-volatile storage medium. The network interface of the communication device is configured to communicate with an external terminal through a network connection. The computer program, when executed by the processor, implements the cell handover method.

Those skilled in the art will appreciate that, the structures shown in FIG. 7 are merely block diagrams of part of the structures related to schemes of the present application, do not constitute a limitation on the communication device to which the schemes of the present application are applied, specifically, the communication device may include more or fewer components than those shown in the drawings, or combine certain components, or have different arrangement of components.

In an embodiment, a communication device is provided. The communication device includes a memory and a processor. The memory stores a computer program. The computer program, when executed by the processor, implements following processes: a spatial domain parameter between the terminal and a current serving cell and a spatial domain parameter between the terminal and a current listening cell in a moving process of a terminal are monitored, where the spatial domain parameter is configured for representing a degree of spatial offset of the terminal with respect to the current serving cell and a degree of spatial offset of the terminal with respect to the current listening cell; in response to determining that the terminal moves within a handover region between the current serving cell and the current listening cell according to the spatial domain parameter between the terminal and the current serving cell and the spatial domain parameter between the terminal and the current listening cell, the current listening cell is configured as a new current serving cell of the terminal.

In an embodiment, the spatial domain parameter includes a time offset and a frequency offset, the computer program, when executed by the processor, implements following processes: in a case where the current serving cell and the current listening cell are non-co-located cells, it is determined that the terminal is located in an overlapping region of the current serving cell and the current listening cell according to a time offset between the terminal and the current listening cell, it is determined that the terminal is moving away from the current serving cell and is approaching the current listening cell according to a frequency offset between the terminal and the current serving cell and a frequency offset between the terminal and the current listening cell, and the current listening cell is configured as the new current serving cell of the terminal

In an embodiment, the spatial domain parameter includes a signal-to-noise ratio and a frequency offset, the computer program, when executed by the processor, implements following processes: in a case where the current serving cell and the current listening cell are co-located cells, it is determined that the terminal enters a primary coverage of the current listening cell according to a signal-to-noise ratio of the terminal to the current serving cell and a signal-to-noise ratio of the terminal to the current listening cell, and it is determined that the terminal is moving away from the current serving cell and the current listening cell according to a frequency offset between the terminal and the current serving cell and a frequency offset between the terminal and the current listening cell, and configure the current listening cell as the new current serving cell of the terminal.

In an embodiment, if the current serving cell and the current listening cell share a baseband processing unit, then the current listening cell is a cell in which a frequency offset from the terminal to a cell among adjacent cells of the current serving cell is a positive value.

In an embodiment, if the current serving cell and the current listening cell do not share a baseband processing unit, then the current listening cell is a cell in which a time offset from the terminal to a cell is minimum and an frequency offset from the terminal to the cell is a positive value in a cell of a next baseband processing unit of the baseband processing unit of the current serving cell.

In an embodiment, the computer program, when executed by the processor, implements following processes: if the time offset between the terminal and the current listening cell is less than a preset time offset threshold, then it is determined that the terminal is located in the overlapping region of the current serving cell and the current listening cell.

In an embodiment, the computer program, when executed by the processor, implements following processes: if the frequency offset between the terminal and the current serving cell is a negative value and the frequency offset between the terminal and the current listening cell is a positive value, then it is determined that the terminal is moving away from the current serving cell and is approaching the current listening cell.

In an embodiment, a computer-readable storage medium is provided. The computer-readable storage medium stores a computer program. The computer program, when executed by the processor, implements following processes: a spatial domain parameter between the terminal and a current serving cell and a spatial domain parameter between the terminal and a current listening cell in a moving process of a terminal are monitored, where the spatial domain parameter is configured for representing a degree of spatial offset of the terminal with respect to the current serving cell and a degree of spatial offset of the terminal with respect to the current listening cell; in response to determining that the terminal moves within a handover region between the current serving cell and the current listening cell according to the spatial domain parameter between the terminal and the current serving cell and the spatial domain parameter between the terminal and the current listening cell, the current listening cell is configured as a new current serving cell of the terminal.

In an embodiment, the spatial domain parameter includes a time offset and a frequency offset, the computer program, when executed by the processor, implements following processes: in a case where the current serving cell and the current listening cell are non-co-located cells, it is determined that the terminal is located in an overlapping region of the current serving cell and the current listening cell according to a time offset between the terminal and the current listening cell, it is determined that the terminal is moving away from the current serving cell and is approaching the current listening cell according to a frequency offset between the terminal and the current serving cell and a frequency offset between the terminal and the current listening cell, and the current listening cell is configured as the new current serving cell of the terminal.

In an embodiment, the spatial domain parameter includes a signal-to-noise ratio and a frequency offset, the computer program, when executed by the processor, implements following processes: in a case where the current serving cell and the current listening cell are co-located cells, it is determined that the terminal enters a primary coverage of the current listening cell according to a signal-to-noise ratio of the terminal to the current serving cell and a signal-to-noise ratio of the terminal to the current listening cell, and it is determined that the terminal is moving away from the current serving cell and the current listening cell according to a frequency offset between the terminal and the current serving cell and a frequency offset between the terminal and the current listening cell, and configure the current listening cell as the new current serving cell of the terminal.

In an embodiment, if the current serving cell and the current listening cell share a baseband processing unit, then the current listening cell is a cell in which a frequency offset from the terminal to a cell among adjacent cells of the current serving cell is a positive value.

In an embodiment, if the current serving cell and the current listening cell do not share a baseband processing unit, then the current listening cell is a cell in which a time offset from the terminal to a cell is minimum and an frequency offset from the terminal to the cell is a positive value in a cell of a next baseband processing unit of the baseband processing unit of the current serving cell.

In an embodiment, the computer program, when executed by the processor, implements following processes: if the time offset between the terminal and the current listening cell is less than a preset time offset threshold, then it is determined that the terminal is located in the overlapping region of the current serving cell and the current listening cell.

In an embodiment, the computer program, when executed by the processor, implements following processes: if the frequency offset between the terminal and the current serving cell is a negative value and the frequency offset between the terminal and the current listening cell is a positive value, then it is determined that the terminal is moving away from the current serving cell and is approaching the current listening cell.

The cell handover apparatus, the communication device and the storage medium provided in the embodiments described above may perform the cell handover method provided in any of the embodiments in the present application, and have corresponding functional modules and beneficial effects for performing the method. Details of the techniques not described in detail in the above-described embodiments may be found in the cell handover method provided in any of the embodiments of the present application.

The above description is only an exemplary embodiment of the present application, and is not intended to limit the scope of protection of the present application.

In general, various embodiments of the present application may be implemented in hardware or special purpose circuits, software, logic or any combination thereof. For example, some aspects may be implemented in hardware, while other aspects may be implemented in firmware or software which may be executed by a controller, microprocessor or other computing device, although the present application is not limited thereto.

Embodiments of the present application may be implemented by a data processor of a mobile device executing computer program instructions, for example in a processor entity, or by hardware, or by a combination of software and hardware. The computer program instructions may be assembler instructions, instruction set architecture (ISA) instructions, machine instructions, machine-related instructions, microcode, firmware instructions, state setting data, or source or object codes written in any combination of one or more programming languages.

Any block diagram of the logic flow in the accompanying drawings of the present application may represent program steps, or may represent interconnected logic circuits, modules, and functions, or may represent a combination of program steps and logic circuits, modules, and functions. The computer program may be stored on a memory. The memory may be of any type suitable for the local technical environment and may be implemented using any suitable data storage technology, such as, but not limited to, a read-only memory (ROM), a random access memory (RAM), an optical memory device and system (digital versatile disc (DVD) or compact disk (CD)), etc. Computer readable media may include non-instantaneous storage media. Data processors may be of any type suitable for the local technical environment, such as, but not limited to, general-purpose computers, specialized computers, microprocessors, digital signal processors (DSP), application specific integrated circuits (ASIC), field-programmable gate array (FPGA)), and processors based on multi-core processor architectures.

The foregoing has provided a detailed description of exemplary embodiments of the present application by way of exemplary and non-limiting examples. Various modifications and adaptations to the foregoing embodiments may become apparent to those skilled in the art in view of the accompanying drawings and the appended claims, without departing from the scope of the present application. Therefore, the proper scope of the present application is defined by the appended claims.

## Claims

1. A cell handover method, comprising:
monitoring a spatial domain parameter in a moving process of a terminal, wherein the spatial domain parameter is configured for representing a degree of spatial offset of the terminal with respect to a current serving cell and a degree of spatial offset of the terminal with respect to a current listening cell; and
in response to determining that the terminal moves within a handover region between the current serving cell and the current listening cell according to the spatial domain parameter, configuring the current listening cell as a new current serving cell of the terminal.

2. The method of claim 1, wherein the spatial domain parameter comprises a time offset and a frequency offset, and in response to determining that the terminal moves within the handover region between the current serving cell and the current listening cell according to the spatial domain parameter, the configuring the current listening cell as the new current serving cell of the terminal comprises:
in response to determining that the current serving cell and the current listening cell are non-co-located cells, determining that the terminal is located in an overlapping region of the current serving cell and the current listening cell according to a time offset between the terminal and the current listening cell, determining that the terminal is moving away from the current serving cell and is approaching the current listening cell according to a frequency offset between the terminal and the current serving cell and a frequency offset between the terminal and the current listening cell, and configuring the current listening cell as the new current serving cell of the terminal.

3. The method of claim 1, wherein the spatial domain parameter comprises a signal-to-noise ratio and a frequency offset, and in response to determining that the terminal moves within the handover region between the current serving cell and the current listening cell according to the spatial domain parameter, the configuring the current listening cell as the new current serving cell of the terminal comprises:
in response to determining that the current serving cell and the current listening cell are co-located cells, determining that the terminal enters a primary coverage of the current listening cell according to a signal-to-noise ratio of the terminal to the current serving cell and a signal-to-noise ratio of the terminal to the current listening cell, and determining that the terminal is moving away from the current serving cell and the current listening cell according to a frequency offset between the terminal and the current serving cell and a frequency offset between the terminal and the current listening cell, and configuring the current listening cell as the new current serving cell of the terminal.

4. The method of any one of claims 1 to 3, wherein in response to determining that the current serving cell and the current listening cell share a baseband processing unit, determining the current listening cell being a cell in which a frequency offset from the terminal to a cell among adjacent cells of the current serving cell is a positive value.

5. The method of claim 1 or 2, wherein in response to determining that the current serving cell and the current listening cell do not share a baseband processing unit, determining the current listening cell being a cell in which a time offset from the terminal to a cell is minimum and an frequency offset from the terminal to the cell is a positive value in a cell of a next baseband processing unit of the baseband processing unit of the current serving cell.

6. The method of claim 2, wherein the determining that the terminal is located in the overlapping region of the current serving cell and the current listening cell according to the time offset between the terminal and the current listening cell comprises:
in response to determining that the time offset between the terminal and the current listening cell is less than a preset time offset threshold, determining that the terminal is located in the overlapping region of the current serving cell and the current listening cell.

7. The method of claim 2, wherein the determining that the terminal is moving away from the current serving cell and is approaching the current listening cell according to the frequency offset between the terminal and the current serving cell and the frequency offset between the terminal and the current listening cell comprises:
in response to determining that the frequency offset between the terminal and the current serving cell is a negative value and the frequency offset between the terminal and the current listening cell is a positive value, determining that the terminal is moving away from the current serving cell and is approaching the current listening cell.

8. A cell handover apparatus, applied to the cell handover method of any one of claims 1 to 7, comprising:
a monitoring module, which is configured to monitor a spatial domain parameter in a moving process of a terminal, wherein the spatial domain parameter is configured for representing a degree of spatial offset of the terminal with respect to a current serving cell and a degree of spatial offset of the terminal with respect to a current listening cell; and
a handover module, which is configured to, in response to determining that the terminal moves within a handover region between the current serving cell and the current listening cell according to the spatial domain parameter, configure the current listening cell as a new current serving cell of the terminal.

9. A communication device, comprising a memory and a processor, wherein the memory stores a computer program, and the computer program, when executed by the processor, implements steps of the cell handover method of any one of claims 1 to 7.

10. A storage medium, storing a computer program, wherein the computer program, when executed by a processor, implements steps of the cell handover method of any one of claims 1 to 7.
